# EUROPEAN PATENT APPLICATION

(11) **EP 1 225 646 A1**
(43) Date of publication of application: **24.07.2002**
(21) Application number: 02001031.0
(22) Date of filing: 17.01.2002
(51) Int. Cl.: H01M 2/10, H01M 10/04, H01M 6/46, H01M 2/20, H01M 2/26

(54) **Assembled battery unit and manufacturing method thereof**

(30) Priority: 17.01.2001 JP 2001009383
(71) Applicant: GS-MELCOTEC CO., LTD., Kyoto-shi, Kyoto 601-8397 (JP)
(72) Inventor: Aoyama, Minoru, GS-Melcotec Co., Ltd., Kyoto-shi, Kyoto 601-8397 (JP)
(74) Representative: Müller-Boré & Partner Patentanwälte

(57) **Abstract**

An assembled battery unit (3) has a plurality of battery cells (9) and one holding plate (8), and the battery cells (9) are fixed on the holding plate (8). In the assembled battery unit (3) constructed as described above, the battery cells (9) are fixed on one holding plate (8). In a case of the above-mentioned assembled battery unit (3) construction, for example, when the assembled battery unit (3) is incorporated in information communication equipment, etc., individual battery cells (9) do not move up and down when the holding plate (8) is held by hand, so that work for installing the assembled battery unit (3) in a housing (7) can be performed easily. Also, since the assembled battery unit (3) is not housed in a casing, but is fixed by one holding plate (8), the assembled battery unit (3) can be housed in the housing for information communication equipment, etc. in a compact form. A circuit board (11) may be present to connect the cells, and the holding plate (8) may have one or more slits (23) for fixation of the cells on the plate (8).

## Description

### Field of the Invention

The present invention relates to an assembled battery unit in which a plurality of battery cells are connected to a circuit board.

### Description of the Prior Art

For example, a lithium-polymer secondary battery uses a gel-form polymer electrolyte, and has characteristics of a high degree of freedom of shape, small thickness, and light weight. Therefore, it has been used for a cellular phone and various types of portable information communication equipment such as a notebook personal computer.

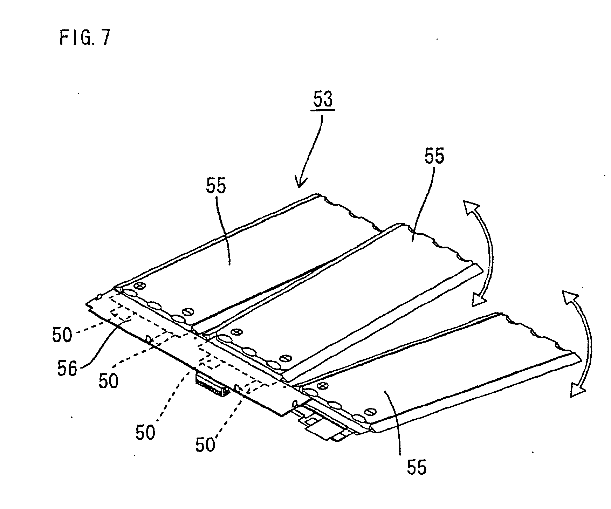

In the case where the lithium-polymer secondary battery is used for portable information communication equipment etc., although a battery cell is sometimes used singly, a plurality of battery cells are often formed into an assembled battery unit 53, for example, as shown in FIG. 7, together with a protective circuit etc. according to the necessary voltage and electric capacity of the equipment.

However, since a lead plate 50 of a battery cell 55 is formed of a thin metal piece, when an assembled battery unit 53 is installed into portable information communication equipment etc., the battery cell 55 moves up and down undesirably and thus it is difficult to install the assembled battery unit 53 in a housing. Needless to say, it is conceivable that the installation is made easy by housing the assembled battery unit 53 in a casing made of a plastic material or the like. In this case, however, the assembled battery unit 53 becomes heavy do to the weight of the casing. Also, in the work for assembling the assembled battery unit 53, it is difficult to connect the lead plate 50 to a circuit board 56 because the battery cell 55 moves up and down undesirably.

The present invention has been accomplished in view of the above situation, and accordingly an object thereof is to provide an assembled battery unit such that the work for installing the assembled battery unit in a housing and assembling the battery unit itself can be performed easily.

### Summary of the Invention

An assembled battery unit in accordance with the present invention has a plurality of battery cells and one holding plate, and the battery cells are fixed on the holding plate.

In the assembled battery unit constructed as described above, the battery cells are fixed on one holding plate. In the case of the above-mentioned assembled battery unit construction, for example, when the assembled battery unit is incorporated in information communication equipment etc., individual battery cells do not move up and down when the holding plate is held by hand, so that the work for installing the assembled battery unit in a housing can be performed easily. Also, since the assembled battery unit is not housed in a casing, but is fixed by one holding plate, the assembled battery unit can be housed in the housing for information communication equipment etc. in a compact form.

Further, in a case where lead plates led out of the battery cell are connected to a common circuit board, the lead plates must be connected to the common circuit board. In this case, individual battery cells do not move up and down when the holding plate is held by hand, so that the work for installing the circuit board can be performed easily.

Further, if the holding plate is formed with a slit at a position between the battery cells, the slit serving to fit a positioning rib, which is provided on the housing for equipment in which the assembled battery unit is incorporated, therein, the effects described below are achieved. When the assembled battery unit is installed in the housing for equipment, the rib fits in the slit, so that the assembled battery unit can be installed at a proper position in the housing. Also, since the slit is located between the battery cells, the projecting portion of the rib is put in a gap between one battery cell and an adjacent battery cell. Therefore, a special housing space for housing the rib need not be provided.

Also, if the battery cell is a thin battery cell, the battery cell is difficult to hold by hand, and the work for installing the circuit board and the work for installing the assembled battery unit in the housing are difficult to do. However, according to the assembled battery unit in accordance with the present invention, either work can be performed easily.

Also, in a manufacturing method for the assembled battery unit in accordance with the present invention in which the lead plates led out of the battery cells are connected to the common circuit board, after the battery cells are fixed on the holding plate, the lead plates of the battery cells are connected to the circuit board. Therefore, the circuit board can be connected easily in a state in which the battery cells are fixed on one holding plate without the individual up and down movement of the battery cell.

Further, if the battery cells are fixed on the holding plate in a state in which the holding plate is set in a jig; the holding plate is formed with a slit for fitting a positioning rib provided on the jig therein at a position between the battery cells, and the battery cells are positioned and fixed between the rib, the effect described below is achieved. In this manufacturing method, if the holding plate is placed in the jig, the positioning rib of the jig projects from the top surface of the holding plate, and the interval of the positioning ribs is equal to the width of the battery cell. Therefore, the positioning of the battery cell can be performed accurately and easily merely by placing the holding plate so that the battery cell can be set between the ribs.

### Brief Description of the Drawings

FIG. 1 is a partially broken perspective view of a notebook personal computer;
FIG. 2 is a sectional view taken along a line A-A of FIG. 1;
FIG. 3 is a perspective view of an assembled battery unit;
FIG. 4 is an explanatory view showing a manufacturing method for an assembled battery unit;
FIG. 5 is a sectional view showing another embodiment of the present invention;
FIG. 6 is a sectional view showing still another embodiment of the present invention; and
FIG. 7 is a perspective view of a conventional assembled battery unit.

### Detailed Description of the Preferred Embodiments

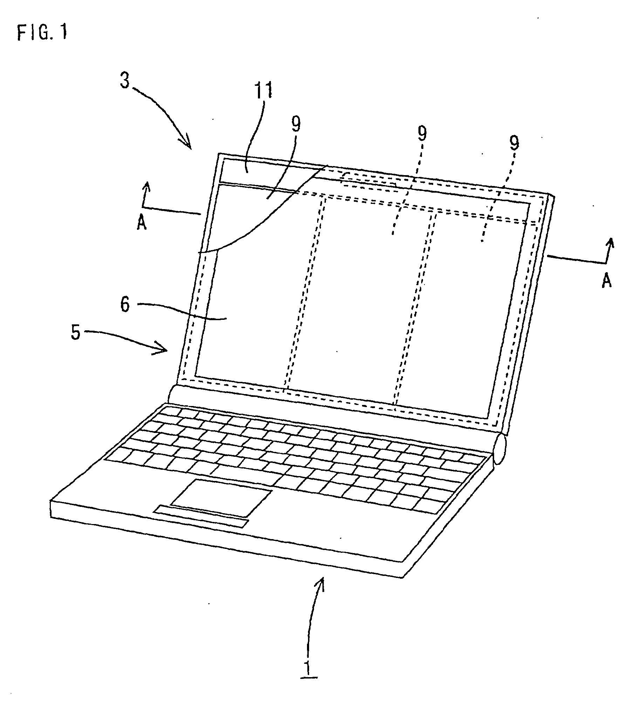

An embodiment of the present invention will be described in detail with reference to FIGS. 1 to 4. FIG. 1 shows a whole of a notebook personal computer 1 in which an assembled battery unit 3 of this embodiment is incorporated. This assembled battery unit 3 is incorporated in a battery installation housing (housing for equipment) 7 disposed at the back of a crystal liquid member 6 of a liquid crystal display member 5 for the notebook personal computer 1. As described later, the assembled battery unit 3 includes one holding plate 8, a plurality of battery cells 9 fixed collectively to the holding plate 8 with an adhesive etc., and a circuit board 11 to which lead plates 10a and 10b for positive and negative terminals extending from the battery cell 9 are connected by ultrasonic welding.

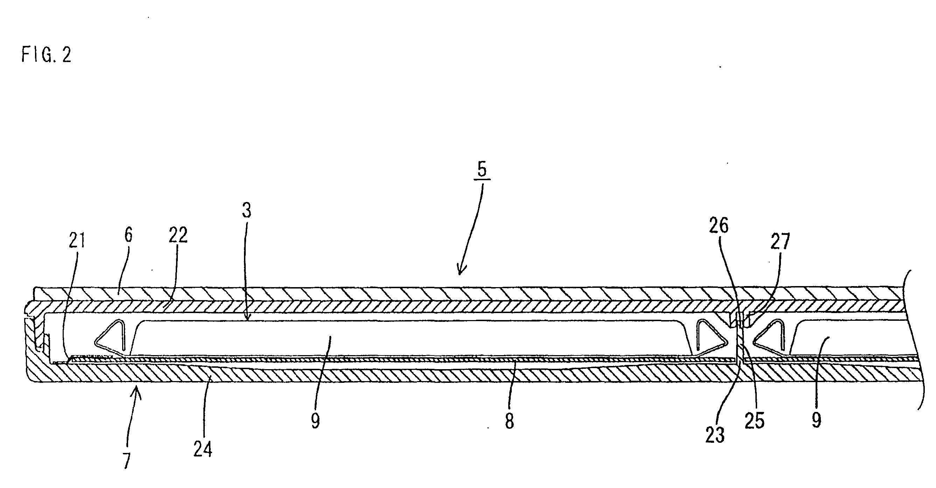

FIG. 2 is a sectional view taken along a line A-A of FIG. 1. The liquid crystal display member 5 includes the battery installation housing 7, a lid 22 of which is capable of being opened and closed, and the liquid crystal member 6 fixed on the top surface of the lid 22. In the battery installation housing 7 is housed the assembled battery unit 3. The assembled battery unit 3 is housed so that the battery cells 9 form the upper surface and the holding plate 8 forms the lower surface. The holding plate 8 is fixed to a bottom plate 24 of the battery installation housing 7 with an adhesive tape 21 in such a manner as to be in contact with the bottom plate 24. Also, the holding plate 8 is provided with a linear slit 23 between one battery cell 9 and the adjacent battery cell 9 arranged on the holding plate 8. This slit 23 penetrates the holding plate 8 from the top surface to the bottom surface. On the other hand, the battery installation housing 7 has a positioning rib 25 projecting from the bottom plate 24, and the position of the positioning rib 25 is such that the positioning rib 25 fits in the slit 23 formed in the holding plate 8. The positioning rib 25 fits in the slit 23 in the holding plate 8 so as to pass through the slit 23 in a state in which the assembled battery unit 3 is installed, and a tip end portion 26 of the rib 25 engages with a concave portion 27 provided on the inside of the lid 22 of the battery installation housing 7.

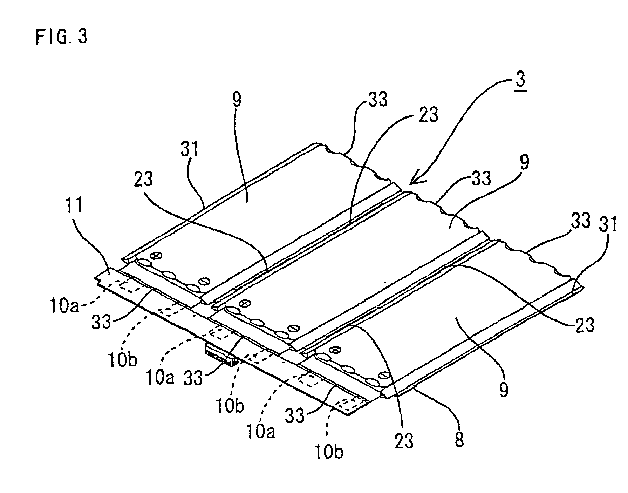

FIG. 3 is a perspective view of the assembled battery unit 3. The battery cell 9 is a substantially rectangular thin battery cell. A thin battery cell means a battery having a small height (H) with respect to the width (W) and depth (D) of the bottom face thereof as shown in FIG. 3. The battery cells 9 are arranged on one holding plate 8 in such a manner that a long side 31 of one battery and a long side 31 of the adjacent battery cell 9 are adjoined each other, and a gap corresponding to the width of the slit 23 in the holding plate 8 is provided between one battery cell 9 and the adjacent battery cell 9. The holding plate 8 has an area approximately equal to the total area of the battery cells 9 arranged as described above, and has a substantially rectangular shape. On the other hand, the short sides 33 of the battery cells 9 are arranged on the holding plate 8 in such a manner that short sides 33 of the battery cells 9 form one line. Also, on one short side 33 of each of the battery cells 9, the pair of flexible thin lead plates 10a and 10b for positive and negative terminals are led in parallel out of a plane along the bottom surface. The battery cells 9 are fixed on the holding plate 8 so that the lead plates 10a and 10b are located on the same side, and are arranged so that the lead plates 10a and 10b for positive and negative terminals of the adjacent battery cells 9 are arranged alternately. The lead plates 10a and 10b are bonded to the circuit board 11 by soldering. The battery cells 9 are connected in series each other by lead parts, not shown, of the circuit board 11.

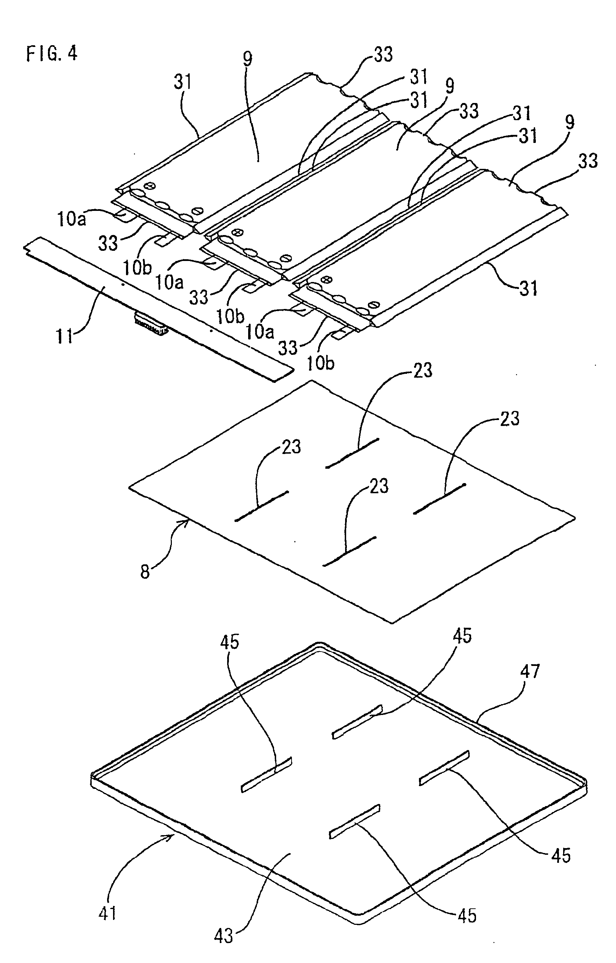

Next, a manufacturing method of the assembled battery unit 3 of this embodiment will be described with reference to FIG. 4. According to this manufacturing method, an assembling jig 41 of a substantially rectangular shallow pan shape is used. A bottom plate 43 of the assembling jig 41 has a substantially rectangular shape slightly larger than the holding plate 8. At the periphery of the bottom plate 43 is erected a side plate 47. At positions which correspond to the slits 23 in the holding plate 8 when the holding plate 8 is superposed on the bottom plate 43, positioning ribs 45 are projectingly provided on the bottom plate 43. The positioning rib 45 is formed so that in a state in which the holding plate 8 is placed on the bottom plate 43, the positioning rib 45 passes through the slit 23 in the holding plate 8 and projects from the top surface of holding plate 8.

In order to manufacture the assembled battery unit 3 by using the assembling jig 41, the holding plate 8 is first placed on the assembling jig 41. By doing this, the ribs 45 of the jig 41 engage with the slits 23 in the holding plate 8, and thus, the holding plate 8 is fixed on the assembling jig 41. The ribs 45 project from the top surface of the holding plate 8 through the slits 23. Next, the battery cell 9 is placed on the holding plate 8 so that the width thereof is kept between the ribs 45 or between the rib 45 and the side plate 47. The battery cell 9 is slid in the lengthwise direction so that the short side 33 that is not connected with the lead plates 10a and 10b comes into contact with the side plate 47 of the assembling jig 41.

Then, the next battery cell 9 is placed on the holding plate 8 so as to adjoin the previously placed battery cell 9. The next battery cell 9 is placed in such a manner that the lead plates 10a and 10b thereof are on the same side as those of the previously placed battery cell 9, and the lead plates 10a and 10b for positive and negative terminals of the adjacent battery cells 9 are arranged alternately. By repeating this operation, the battery cells 9 in the plural number are arranged on the holding plate 8. If the battery cells 9 are arranged on the holding plate 8 by using the assembling jig 41 in this manner, a width direction of the battery cell 9 is regulated by the rib 45 and the side plate 47 of the jig 41, and the lengthwise direction thereof is regulated by the side plate 47 of the assembling jig 41. Therefore, the positioning of the battery cell 9 on the holding plate 8 can be performed accurately and easily.

In the state in which the battery cells 9 are arranged on the holding plate 8 as described above, the battery cells 9 are fixed to the holding plate 8 with an adhesive, etc., not shown. Thus, the battery cells 9 in the plural number are fixed collectively on one holding plate 8. Then, the lead plates 10a and 10b are soldered to the circuit board 11, by which the assembled battery unit 3 is completed. Since the battery cells 9 are collectively fixed on one holding plate 8 as described above, the circuit board 11 can be connected to the lead plates 10a and 10b easily, without the individual up and down movement of the battery cells 9.

The following is a description of a case where the assembled battery unit 3 of this embodiment constructed as described above, is installed in the battery installation housing 7. First, the assembled battery unit 3 is raised while the surface of the holding plate 8 is supported. The assembled battery unit 3 is housed in the battery installation housing 7 so that the ribs 25 of the battery installation housing 7 fit in the slits 23 in the holding plate 8, and the holding plate 8 is fixed on the bottom plate 24 of the battery installation housing 7 with the adhesive tape 21. Thus, for the assembled battery unit 3 of this embodiment, the battery cells 9 can be handled as a unit with the holding plate 8 being used as a support, without the up and down movement of the battery cells 9. Therefore, the assembled battery unit 3 can easily be installed in the battery installation housing 7. Also, since the ribs 25 fit in the slits 23 when the assembled battery unit 3 is installed in the battery installation housing 7, the assembled battery unit 3 can be installed in a proper position in the battery installation housing 7.

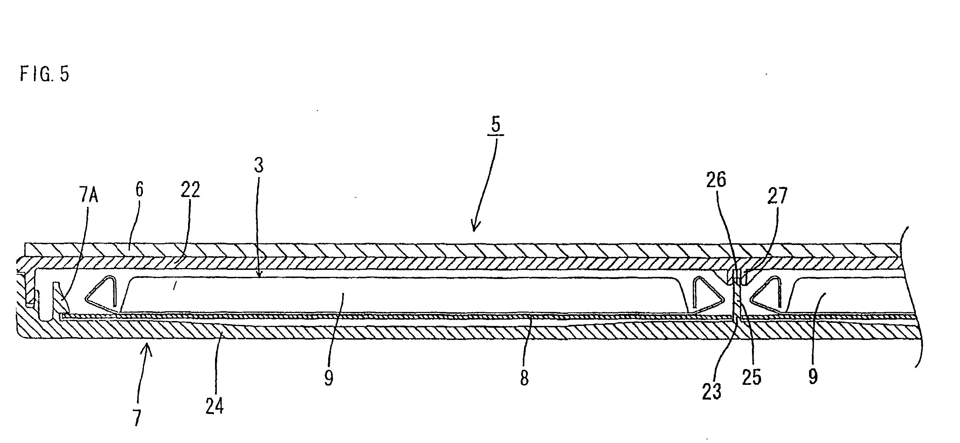

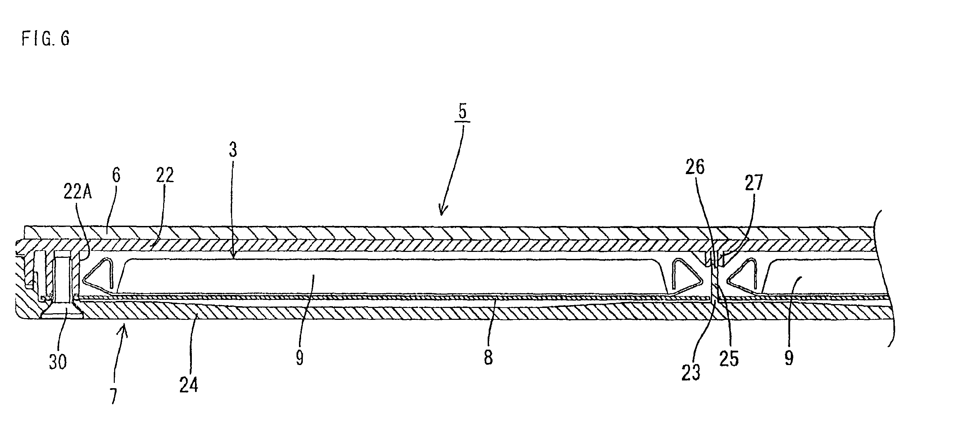

The present invention is not limited to the embodiment explained in the above description and drawings. For example the embodiments described below are also embraced in the technical scope of the present invention, and further, besides the embodiments described below, various changes and modifications can be made without departing from the spirit and scope of the present invention.
(1) Although the assembled battery unit 3 using the battery cells 9 consisting of lithium-polymer secondary batteries has been described in the above-mentioned embodiment, it is a mater of course that an assembled battery unit consisting of other primary batteries or secondary batteries can be embraced in the present invention.
(2) Although the assembled battery unit 3 installed in the battery installation housing 7 used for a notebook personal computer has been described in the above-mentioned embodiment, it is a matter of course that the assembled battery unit 3 incorporated in other electronic equipment can be embraced in the present invention.
(3) Although the manufacturing method of the assembled battery unit 3 using the assembling jig 41 has been described in the above-mentioned embodiment, it is a matter of course that the battery cells 9 can be fixed directly on one holding plate without the use of the assembling jig.
(4) Although the lead plates 10a and 10b of the battery cell 9 have been connected to the circuit board 11 by ultrasonic welding in the above-mentioned embodiment, the connecting method is not limited to this, and it is a matter of course that soldering or spot welding can be performed for the connection.
(5) Although the battery cells 9 having the same shape have been arranged on the holding plate 8 in the above-mentioned embodiment, the configuration of the battery cells is not limited to this, and it is a matter of course that battery cells having a different shape can be arranged on the holding plate.
(6) Although the holding plate 8 has been fixed to the battery installation housing 7 with the adhesive tape 21 in the above-mentioned embodiment, for example, as shown in FIG. 5, the construction may be such that elastic engagement claws 7A are provided on both sides of the battery installation housing 7, and the holding plate 8 is fitted in the elastic engagement claws 7A.
   Also, as shown in FIG. 6, in the case of a construction in which the battery installation housing 7 is integrated with the lid 22 by threadedly installing screws 30 in a boss 22A of the lid 22, the construction may be such that the holding plate 8 is held between the boss 22A and the bottom plate 24 of the battery installation housing 7 and thereby fixed to the battery installation housing 7.
(7) Although the holding plate 8 and the circuit board 11 have been formed by separate parts in the above-mentioned embodiment, for example, the circuit board 11 may be made larger so as to be capable of holding the battery cells, and thus, may be provided with a function of serving as a holding plate.

## Claims

1. An assembled battery unit (3), comprising:
a plurality of battery cells (9), and
a holding plate (8),
wherein said plurality of battery cells are fixed on said holding plate (8).

2. The assembled battery unit (3) according to claim 1, further comprising a common circuit board (11), wherein said plurality of battery cells each have a pair of lead plates (10a, 10b) that are connected to said common circuit board (11).

3. The assembled battery unit (3) according to claim 2, wherein said holding plate (8) has at least one slit formed therein, the at least one slit being positioned between a pair of said plurality of battery cells, wherein the at least one slit is operable to have a common circuit board (11) positioning rib (45) provided on a housing (7) for equipment in which said assembled battery unit (3) is incorporated fit in the at least one slit.

4. The assembled battery unit (3) according to claim 2 or 3, wherein said pair of lead plates (10a, 10b) lead in parallel out of a plane along a bottom surface of said plurality of battery cells.

5. The assembled battery unit (3) according to one of the preceding claims, wherein said plurality of battery cells are thin battery cells.

6. The assembled battery unit (3) according to one of the preceding claims, wherein said holding plate (8) has an area approximately equal to an area of said plurality of battery cells arranged side by side.

7. The assembled battery unit (3) according to one of the preceding claims and claim 2, wherein said pairs of lead plates (10a, 10b) are soldered to said common circuit board (11).

8. The assembled battery unit (3) according to one of the preceding claims, wherein said plurality of battery cells are fixed on said holding plate (8) by an adhesive.

9. The assembled battery unit (3) according to one of the preceding claims and claim 2, wherein said pairs of lead plates (10a, 10b) of said plurality of battery cells are arranged alternatively as positive lead plates (10a, 10b) and negative lead plates (10a, 10b).

10. The assembled battery unit (3) according to one of the preceding claims, wherein said plurality of battery cells are lithium-polymer batteries .

11. The assembled battery unit (3) according to one of the preceding claims and claim 2, wherein said common circuit board (11) and said holding plate (8) are a same structure.

12. A manufacturing method for an assembled battery unit (3) in which lead plates (10a, 10b) led out of a plurality of battery cells (9) are connected to a common circuit board (11), said manufacturing method comprising:
fixing the plurality of battery cells on a holding plate (8); and
connecting the lead plates (10a, 10b) of the plurality of battery cells to the common circuit board (11).

13. The manufacturing method according to claim 12, wherein said fixing the plurality of battery cells comprises:
setting the holding plate (8) in a jig, such that at least one slit formed in the holding plate (8) is fitting with at least one common circuit board (11)positioning rib (45) correspondingly provided on the jig at a position between positions where two adjacent battery cells are to be positioned;
positioning the plurality of battery cells on the holding plate (8) such that the at least one common circuit board (11) positioning rib (45) is between the two adjacent battery cells of the plurality of battery cells; and
fixing the plurality of battery cells to the holding plate (8).

14. The manufacturing method according to claim 12 or 13, wherein the plurality of battery cells are fixed on the holding plate (8) with an adhesive.

15. The manufacturing method according to claim 12, 13 or 14, wherein the lead plates (10a, 10b) of the plurality of battery cells are connected to the common circuit board (11) by soldering
